# FASCICULE DE BREVET EUROPEEN

(11) **EP 3 443 217 B1**
(45) Date de publication et mention de la délivrance du brevet: **31.08.2022**
(21) Numéro de dépôt: 17722100.9
(22) Date de dépôt: 13.04.2017
(51) Int. Cl.: F02N 15/04, F16D 3/68, F16H 1/28, F16H 55/14, F02N 11/00, F02N 15/02, F02N 15/06, F02N 15/00, F16H 3/44

(54) **DÉMARREUR POUR MOTEUR THERMIQUE DE VÉHICULE AUTOMOBILE MUNI DE PLOTS D'AMORTISSEMENT À FORME OPTIMISÉE**
STARTER FÜR VERBRENNUNGSMOTOR EINES KRAFTFAHRZEUGS AUSGESTATTET MIT STOSSDÄMPFENDEN ELEMENTEN MIT OPTIMIERTER FORM
STARTER FOR COMBUSTION ENGINE OF MOTOR VEHICLE PROVIDED WITH SHAPE-OPTIMIZED SHOCK ABSORBING ELEMENTS

(30) Priorité: 13.04.2016 FR 1653235
(43) Date de publication de la demande: 20.02.2019
(73) Titulaire: Valeo Equipements Electriques Moteur, 94046 Créteil Cedex (FR)
(72) Inventeur: MATEUS, José, 38070 Isle d'Abeau (FR)
(74) Mandataire: Valeo Powertrain Systems
(86) Numéro de dépôt international: PCT/FR2017/050886
(87) Numéro de publication internationale: WO 2017/178762

(56) Documents cités:
- WO-A1-2012/153060
- DE-A1-102010 062 692
- DE-A1-102014 209 315
- DE-A1-102014 217 349
- FR-A1- 2 745 855
- FR-A1- 2 787 833
- FR-A1- 3 089 260
- JP-A- H 109 104
- JP-A- 2001 065 442
- KR-A- 20110 072 188
- US-A- 2 764 003

## Description

La présente invention porte sur démarreur pour moteur thermique de véhicule automobile muni de plots d'amortissement à forme optimisée.

Afin de démarrer un moteur à combustion interne, notamment d'un véhicule automobile, il est connu d'utiliser une machine électrique tournante sous la forme d'un démarreur pourvu d'un lanceur capable de transmettre une énergie de rotation du démarreur à un vilebrequin du moteur thermique par l'intermédiaire d'une couronne de démarrage.

Ce lanceur est monté mobile en translation sur un arbre d'entraînement entre une position de repos dans laquelle les dents d'un pignon d'entraînement sont dégagées des dents d'une couronne de démarrage solidaire du vilebrequin du moteur thermique, et une position d'activation dans laquelle les dents du pignon d'entraînement engrènent avec des dents de la couronne de démarrage. La liaison entre le lanceur et l'arbre d'entraînement est réalisée via des cannelures ménagées dans l'entraîneur coopérant avec des cannelures de forme complémentaire ménagées dans l'arbre d'entraînement.

Un réducteur de vitesse par exemple de type épicycloïdal est interposé entre l'arbre du rotor et l'arbre d'entraînement. Ce réducteur de vitesse comporte un porte-satellites ayant un plateau solidaire de l'arbre d'entraînement. Des satellites montés rotatifs sur le porte-satellites engrènent d'une part avec une couronne portée par une plaque de base et d'autre part avec un pignon planétaire solidaire de l'arbre du moteur électrique.

Afin de limiter le niveau de couple dans le démarreur, il est connu d'installer des plots d'amortissement en contact avec la couronne réductrice. Le problème est que le contact de ce type de plots avec les pattes de la couronne engendre de fortes pressions locales conduisant à une déchirure rapide du plot lors des essais en endurance, en particulier pour les démarreurs de type "stop and start" devant supporter un très grands nombre de cycles de fonctionnement. DE102014217349A1, DE102010062692A1, DE102014209315A1 et KR20110072188 divulguent notamment des démarreurs pour moteurs à combustion connus dans l'art antérieur.

L'invention vise à remédier à cet inconvénient en proposant un démarreur pour moteur thermique d'un véhicule automobile selon la revendication 1 ci-jointe.

Ainsi, lorsque le plot amortisseur est comprimé entre la patte de la couronne et la partie butée correspondante, l'invention permet d'éviter que le plot vienne en contact avec une arête saillante de la patte correspondante. Cela permet d'augmenter sensiblement la durée de vie des plots amortisseurs. Selon une réalisation, les plots amortisseurs présentent en outre une longueur axiale inférieure à une longueur axiale des pattes. Ainsi, chaque plot est positionné en retrait par rapport à l'arête saillante.

Selon une réalisation l'au moins un plot est plein. Par plein on entend que le plot ne comprend pas d'ouverture.

Selon une réalisation, un rayon de courbure du coin arrondi est de l'ordre de 4mm plus ou moins 10%.

Selon une réalisation, les plots amortisseurs présentent une forme carrée.

Selon une réalisation, chaque plot amortisseur est de préférence symétrique. Cela permet de faciliter le montage en autorisant une mise en place sur la couronne suivant différents sens par l'opérateur. Le plot n'a donc pas besoin de détrompeur pour son montage.

Selon une réalisation, la couronne dentée est montée avec un jeu radial entre sa périphérie externe et une périphérie interne des parties butées, ledit jeu radial étant tel qu'il autorise la couronne dentée à s'auto-centrer sous des efforts appliqués par lesdits satellites. Cela permet de raccourcir considérablement les chaînes de côtes du réducteur pour obtenir un meilleur positionnement des axes du système. L'invention permet ainsi de minimiser le bruit produit par le démarreur.

Selon une réalisation, ladite couronne dentée est réalisée en acier fritté. Selon une réalisation, ladite plaque de base comporte:
- une plaquette métallique,
- un coussinet monté sur ledit arbre d'entraînement pour guider en rotation ledit arbre d'entraînement,
- une portion plastique surmoulée sur ladite plaquette métallique et ledit coussinet pour les rendre solidaires l'un de l'autre,
- ladite plaquette métallique comprenant une portion principale et un épaulement s'étendant axialement par rapport à ladite portion principale sur une extrémité située du côté dudit coussinet. L'invention permet ainsi, du fait de la surépaisseur locale de la plaquette métallique obtenue par la création de l'épaulement, de limiter le porte-à-faux du coussinet par rapport la plaque de base et donc de moins solliciter le plastique autour du coussinet lorsque le démarreur est en fonctionnement.

Selon une réalisation, ladite portion plastique comprend une couche de plastique entre une périphérie externe dudit coussinet et une périphérie interne de ladite plaquette. La couche de plastique permet ainsi de supporter l'angle pris par le coussinet généré par la flexion de l'arbre d'entraînement afin de limiter les surpressions de bord.

Selon une réalisation, une épaisseur de ladite couche de plastique est d'au moins 0.5mm.

Selon une réalisation, un pignon d'entraînement monté sur ledit arbre d'entraînement est positionné en dehors d'un support dudit démarreur. On améliore la tenue en fatigue d'un tel système qui génère des contraintes internes importantes en raison du porte-à-faux de l'arbre lorsque le lanceur est en position active.

Selon une réalisation, ledit démarreur comprend en outre un palier avant monté entre ledit support et ledit arbre d'entraînement pour guider en rotation ledit arbre d'entraînement, un lanceur comprenant des cannelures hélicoïdales coopérant avec des cannelures hélicoïdales dudit arbre d'entraînement mobile entre une position repos et une position active et en ce que en position active, ledit lanceur vient en butée contre un épaulement dudit arbre d'entraînement situé entre ladite plaque de base et ledit palier avant. Un tel épaulement génère des chocs et donc des contraintes internes importantes lorsque le lanceur passe en position active, en sorte que l'invention est particulièrement adaptée à être mise en œuvre avec cette configuration de lanceur dite à "butée sur cannelure".

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'un démarreur de moteur thermique de véhicule automobile selon la présente invention;
La figure 2a est une vue en coupe longitudinale détaillée d'un réducteur de vitesse selon la présente invention;
La figure 2b est une vue en coupe de la plaque de base selon la présente invention portant la couronne du réducteur de vitesse;
La figure 2c représente une vue en coupe détaillée de la zone entre l'épaulement et le coussinet de la plaque de base selon la présente invention;
Les figures 3a et 3b sont respectivement des vues en perspective et de dessus illustrant le montage de la couronne du réducteur de vitesse avec la plaque de base selon la présente invention;
Les figures 4a à 4c sont des vues respectivement en perspective, de dessus, et en coupe transversale d'un plot amortisseur selon l'invention;
La figure 5 est une vue schématique en coupe transversale de la roue libre à rouleaux du démarreur de la figure 1.

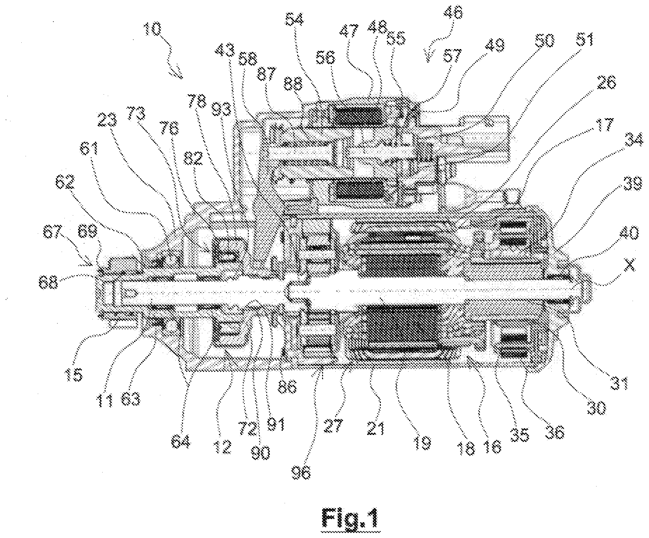

Les éléments identiques, similaires ou analogues conservent les mêmes références d'une figure à l'autre. Dans la description qui va suivre, on utilisera une orientation axiale d'arrière en avant correspondant à l'orientation de droite à gauche de la figure 1. Autrement dit, un élément avant est situé du côté du pignon d'entraînement 15, tandis qu'un élément arrière est situé du côté opposé, c'est-à-dire du côté du flasque arrière 39.

En référence à la figure 1, le démarreur 10 selon l'invention comporte un arbre d'entraînement 11, un lanceur 12 monté sur l'arbre d'entraînement 11 et comportant un pignon d'entraînement 15. En outre, un moteur électrique 16 comporte un stator 17 inducteur et un rotor 18 induit montés de manière coaxiale. Le stator 17 entoure le rotor 18, lequel est monté sur un arbre 19 du moteur électrique 16. Le rotor 18 est apte à tourner autour d'un axe X à l'intérieur d'une culasse 21. Cette dernière est solidaire d'un support 23 métallique du démarreur 10 destiné à être fixé sur une partie fixe du véhicule automobile.

Le stator 17 comporte une pluralité de pôles magnétiques 26 inducteurs portés par la périphérie interne de la culasse 21. En variante, le stator 17 comporte un bobinage inducteur comportant deux paires d'enroulements qui sont enroulés chacun autour d'une masse polaire solidaire de la culasse 21. Chaque enroulement est composé d'un conducteur continu enroulé autour de la masse polaire dans le sens de son épaisseur de manière à former des spires jointives concentriques de diamètre croissant.

Le rotor 18 comporte un paquet de tôles doté de rainures pour le montage de conducteurs électriques en forme d'épingles. Ces conducteurs sont reliés entre eux pour former un bobinage rotorique 27 en liaison avec des lames conductrices 30 appartenant à un collecteur 31 à corps électriquement isolant solidaire de l'arbre 19 du moteur électrique 16. En variante, le bobinage 27 est à fil continu.

Des balais 34 frottent sur les lames collectrices 30 du collecteur 31 pour alimenter le bobinage rotorique 27. Les balais 34 appartiennent à un porte-balais 35 équipé de cages de guidage et de réception des balais 34. Ces balais 34 sont sollicités en direction des lames collectrices 30 par des ressorts 36 par exemple de type à spirale. Le porte-balais 35 est solidaire d'un flasque arrière 39 métallique présentant dans sa partie centrale un logement pour le montage d'un palier 40 de type roulement à aiguilles. Le flasque 39 sert au montage à rotation de l'extrémité arrière de l'arbre 19 du moteur électrique 16. L'extrémité avant de l'arbre 19 pénètre, via un tronçon de section réduite, à l'intérieur d'un alésage réalisé dans la partie arrière de l'arbre d'entraînement 11, un coussinet 43 étant intercalé entre ces deux éléments 19, 11.

L'axe de l'arbre 19 est confondu avec l'axe X du rotor 18 et avec l'axe de l'arbre d'entraînement 11. Le flasque arrière 39 sert de centreur à l'extrémité arrière de la culasse 21 et est relié par des tirants au support 23 du démarreur 10. La culasse 21 métallique est intercalée à serrage entre le support 23 métallique et le flasque arrière 39 métallique.

Le démarreur 10 comporte également un contacteur 46 électromagnétique s'étendant parallèlement au moteur électrique 16 en étant implanté radialement au-dessus de celui-ci. Le contacteur 46 présente une cuve 47 métallique portée par le support 23, et équipée d'une bobine d'excitation 48 dotée d'au moins un enroulement. La cuve 47 est fermée à l'arrière par un capot 49 en matière électriquement isolante. La fixation du capot 49 est réalisée par rabattement de matière de l'extrémité libre de la cuve 47.

Des bornes 50, 51 sont conformées pour former chacune un contact fixe à l'intérieur du capot 49. L'une des bornes 50 est destinée à être reliée à la borne positive de la batterie, l'autre borne 51 est connectée par l'intermédiaire d'un câble aux balais 34 de polarités positives. De manière connue, lors de l'excitation de la bobine 48, un noyau mobile 54 est attiré par attraction magnétique en direction du noyau fixe 55 pour, d'une part, agir après rattrapage d'un jeu sur une tige 56 portant un contact mobile 57 pour provoquer la fermeture des contacts 50, 51 du contacteur 46 et alimenter le moteur électrique 16 du démarreur 10, et, d'autre part, actionner un levier de commande 58 du lanceur 12.

L'arbre d'entraînement 11 est monté rotatif dans un palier avant 61 du support 23 par l'intermédiaire d'un porte-pignon 62. Ce palier avant 61 permettant de guider en rotation l'arbre d'entraînement 11 est constitué à titre d'exemple par un roulement à billes. Le porte-pignon 62 comporte un arbre creux 63 pour autoriser le passage de l'arbre d'entraînement 11. Deux paliers 64 sont interposés entre la périphérie externe de l'arbre d'entraînement 11 et la périphérie interne de l'arbre porte-pignon 63 pour autoriser un mouvement de rotation relatif entre les deux éléments 11, 63. La périphérie externe de l'arbre porte-pignon 63 est en contact avec la périphérie interne du palier avant 61.

Le pignon d'entraînement 15 est monté solidaire en rotation avec l'arbre porte-pignon 63 par l'intermédiaire de cannelures axiales réalisées dans la périphérie interne du pignon en prise avec des cannelures axiales de forme complémentaire réalisées dans la périphérie externe de l'arbre porte-pignon 63. En outre, un dispositif d'absorption des chocs 67 comporte un ressort 68 sollicitant le pignon 15 contre une butée 69 à l'état repos. En cas de choc avec les dents de la couronne de démarrage, le ressort 68 est comprimé par le déplacement en translation du pignon 15 qui a alors tendance à reculer par rapport à la butée 69. On appréciera que le pignon 15 est monté sur l'arbre d'entraînement 11 en dehors du support 23 du démarreur 10. Une telle configuration de démarreur 10 dite "à pignon sortant" génère des contraintes internes importantes du fait du porte-à-faux de l'arbre d'entraînement 11 lorsque le lanceur 12 est en position active.

Le lanceur 12 est monté coulissant sur l'arbre d'entraînement 11 et comporte un entraîneur 72 configuré pour être actionné par le levier de commande 58 pivotant, et une roue libre 73 à galets intercalée axialement entre l'entraîneur 72 et le porte-pignon 62.

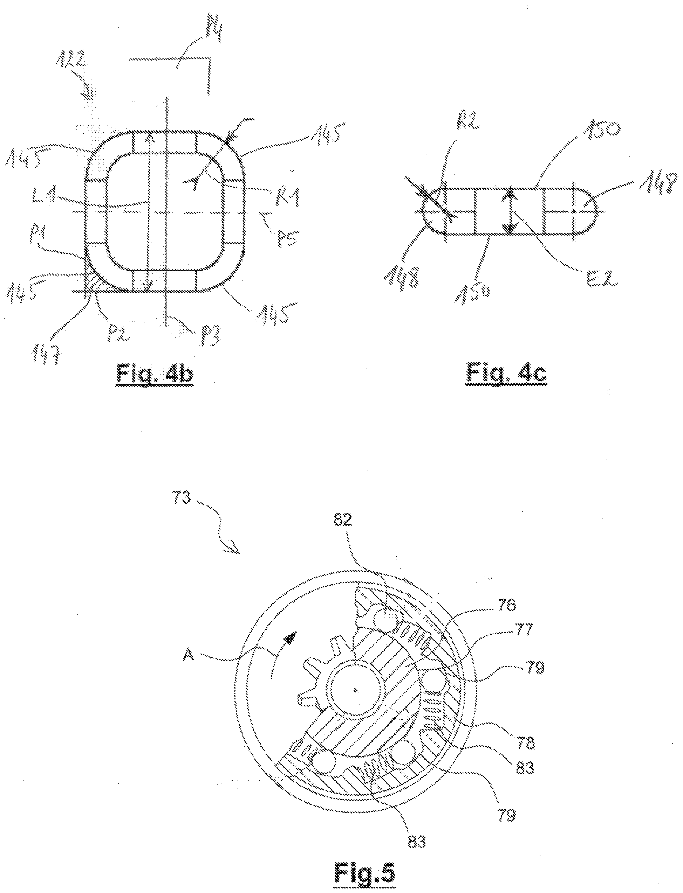

Cette roue libre 73 comprend une bague entraînée 76 située du côté de l'extrémité arrière de l'arbre porte-pignon 63. La bague entraînée 76 comporte sur sa périphérie externe une piste interne 77 bien visible en figure 5. Dans un exemple de réalisation, la bague entraînée 76 est monobloc de même matière avec l'arbre porte-pignon 63. En outre, l'entraîneur 72 comprend une bague entraînante 78 de la roue libre 73 munie de rampes 79 sur sa périphérie interne. La bague entraînante 78 est ainsi solidaire en rotation de l'arbre 11 via l'entraîneur 72 lorsque le lanceur 12 est en position active. Une pluralité de rouleaux 82 sont montés entre la piste interne 77 et une rampe 79 correspondante.

La roue libre 73 comporte une pluralité de ressorts de pré-charge 83 montés chacun entre un rebord d'une rampe 79 et un rouleau 82 correspondant. Le sens de verrouillage de la roue libre 73 est illustré par la flèche A.

L'entraîneur 72 comporte en outre une rondelle 86 visible en figure 1 définissant avec une paroi transversale de l'entraîneur 72 une gorge pour la réception des doigts de l'extrémité inférieure du levier 58 en forme de fourche. L'extrémité supérieure du levier 58 est montée de manière connue à articulation sur une tige 87 reliée élastiquement au noyau mobile 54 via un ressort 88, dit ressort dent contre dent, logé dans le noyau mobile 54. L'entraîneur 72 est doté intérieurement de cannelures hélicoïdales 90 en prise de manière complémentaire avec des dentures hélicoïdales 91 externes portées par l'arbre d'entraînement 11 au voisinage de son extrémité arrière de plus grand diamètre (cf. figure 1). Le lanceur 12 intégrant la roue libre 73 est ainsi animé d'un mouvement de translation lorsqu'il est déplacé par le levier 58 entre une position repos dans laquelle le pignon 15 est dégagé de la couronne de démarrage du moteur thermique et une position active dans laquelle le pignon 15 est en prise avec la couronne de démarrage du moteur thermique. En position active, l'entraîneur 72 vient en butée contre un épaulement 93 réalisé entre les dentures 91 de l'arbre d'entraînement 11. Cet épaulement 93 de l'arbre d'entraînement 11 est situé axialement entre la plaque de base 106 et le palier avant 61.

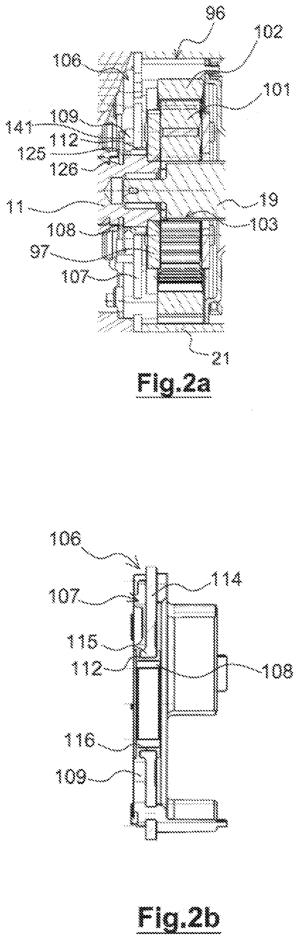

Par ailleurs, comme cela est bien visible sur la figure 2a, un réducteur de vitesse 96 prenant la forme d'un train épicycloïdal est monté entre l'arbre du rotor 18 et l'arbre d'entraînement 11. Plus précisément, l'extrémité arrière de l'arbre d'entraînement 11 est configurée pour être solidaire d'un plateau d'un porte-satellites 97 par exemple par sertissage. Des satellites 101 engrènent d'une part avec une couronne 102 formant planétaire externe et d'autre part avec un pignon 103 solidaire de l'extrémité avant de l'arbre de rotor 19 formant planétaire interne du réducteur 96. Les satellites 101 sont montés libres en rotation chacun autour d'un axe porté par le porte-satellites 97. Les satellites 101 sont au moins au nombre de deux. En l'occurrence, on utilise trois satellites 101.

La couronne 102 est portée par une plaque de base 106 montrée en détails sur la figure 2b solidaire avec la culasse 21 du moteur par serrage entre ladite culasse 21 et le support 23 du démarreur 10. La plaque de base 106 comporte une plaquette 107 métallique, un coussinet 108 monté sur l'arbre d'entraînement 11 pour guider en rotation l'arbre d'entraînement 11, ainsi qu'une portion plastique 109 surmoulée sur la plaquette 107 et le coussinet 108 pour les rendre solidaires l'un de l'autre.

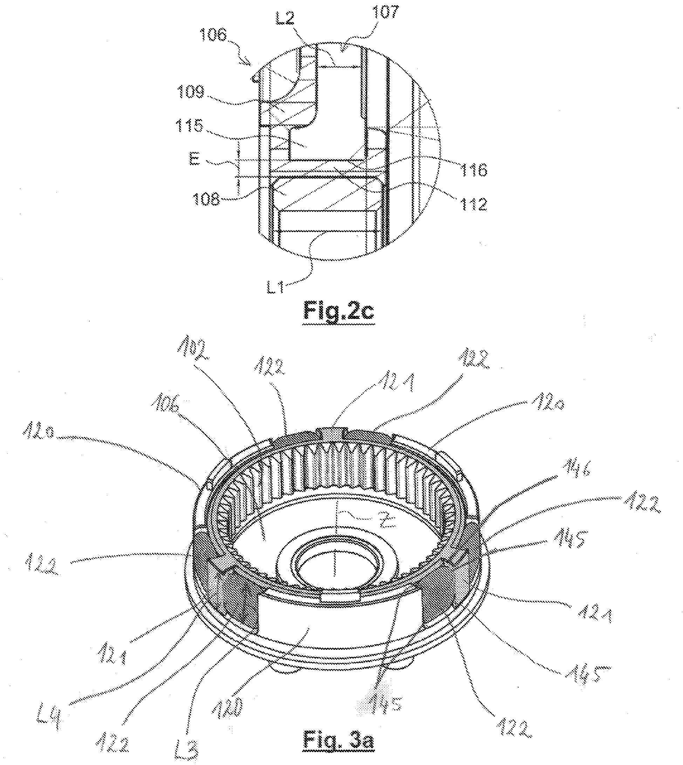

La portion plastique 109 comprend une couche de plastique 112 entre une périphérie externe du coussinet 108 et une périphérie interne de la plaquette 107 correspondant à un bord de la plaquette 107 délimitant une ouverture centrale 116 pour le passage de l'arbre 11. Une telle couche 112 bien visible sur la figure 2c permet de supporter l'angle pris par le coussinet 108 généré par la flexion de l'arbre 11 afin de limiter les surpressions de bord.

L'épaisseur E de cette couche de plastique 112 est d'au moins 0.5mm. Afin de minimiser la pression exercée par l'arbre d'entraînement 11, il est possible d'utiliser un coussinet 108 ayant une longueur axiale supérieure à 5mm.

Dans l'exemple de réalisation des figures 2b et 2c, la plaquette 107 métallique comprend une portion principale 114 et un épaulement 115 s'étendant axialement par rapport à la portion principale 114 sur une extrémité de la plaquette 107 située du côté du coussinet 108. L'épaulement 115 se situe ainsi en périphérie interne de la plaquette 107 autour de l'ouverture centrale 116 de la plaquette 107, tandis que la portion principale 114 s'étend depuis l'épaulement 115 jusqu'à la périphérie externe de la plaquette 107.

La plaquette 107 présente ainsi une surépaisseur au niveau de l'extrémité située du côté du coussinet 108. Le coussinet 108 a une longueur axiale L1 supérieure à l'épaisseur axiale L2 de la portion principale 114 de la plaquette 107.

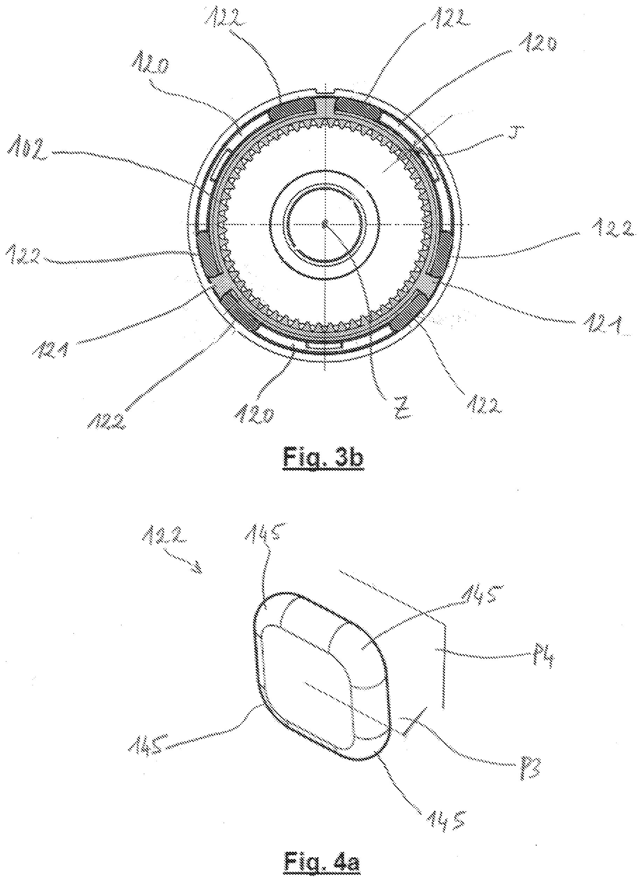

Par ailleurs, comme cela est bien visible en figure 3a et 3b, la portion plastique 109 comprend des parties butées 120 situées entre la couronne 102 et la culasse 21. Ces parties butées 120 s'étendant circonférentiellement autour de la couronne 102 permettent de maintenir la couronne 102 radialement dans la culasse 21. Ces parties butées 120 s'étendent chacune suivant un arc de cercle. Les parties butées 120 sont réparties angulairement de façon régulière suivant une circonférence de la plaque de base 106.

La couronne dentée 102 est montée avec un jeu radial J entre sa périphérie externe et une périphérie interne des parties butées 120 (cf. figure 3b). Ce jeu radial J est tel qu'il autorise ladite couronne dentée 102 à s'auto-centrer sous les efforts appliqués par les satellites 101. Cela permet de raccourcir considérablement les chaînes de côtes du réducteur pour obtenir un meilleur positionnement des axes du système. Le jeu radial J entre la périphérie externe de la couronne 102 et la périphérie interne des parties butées 120 est supérieur à 0.15mm. Le jeu radial J est de préférence de l'ordre de 0.25mm plus ou moins 10%.

Afin de faciliter le phénomène d'auto-centrage de la couronne 102, il existe un faible jeu entre les flancs des dents des satellites 101 et les flancs des dents de la couronne 102. Ce jeu pourra par exemple être inférieur à 0.1mm. Ce jeu peut être bien contrôlé avec une couronne 102 réalisée en acier fritté qui permet de garantir des dimensions très précises de la couronne obtenue.

La couronne 102 rapportée sur la plaque de base 106 comprend des pattes 121 s'étendant à la périphérie externe de la couronne 102. Des plots amortisseurs 122 sont montés entre les pattes 121 de la couronne 102 et les parties butées 120 de la portion plastique 109. Les bords de chaque plot amortisseur 122 sont insérés dans des formes creuses complémentaires réalisées dans une patte 121 et un bord d'extrémité de la partie butée 120 correspondants. Chaque patte 121 est positionnée entre deux plots 122 adjacents, en sorte que chacun des deux plots 122 est en appui d'une part contre la patte 121 et d'autre part contre un rebord d'une partie butée 120 correspondante.

Comme on peut le voir clairement sur la figure 3a, les plots amortisseurs 122 présentent une forme carrée ayant au moins un coin arrondi 145 situé du côté d'une arête saillante 146 d'une patte 121 correspondante de la couronne dentée 102. Ainsi, lorsque le plot amortisseur 122 est comprimé entre la patte 121 de la couronne 102 et la partie butée 120 correspondante, la forme arrondie du coin 145 permet d'éviter que le plot 122 vienne en contact avec l'arête saillante 146 de la patte 121 correspondante.

On observe que le coin 145 est arrondi suivant un rayon de courbure R1 situé dans un plan P4 comprenant l'ensemble des coins dudit plot amortisseur (122), de telle façon qu'il existe un espace 147 (cf. figure 4b) entre le coin arrondi 145 et le coin droit défini par l'intersection des plans P1, P2 passant par les faces latérales reliées par ce coin arrondi 145, c'est à dire qu'il y a eu un retrait de matière par rapport à un plot 122 de forme carrée à coins droits. L'arête saillante 146 correspond à un bord de la face d'extrémité axiale de la patte 121 située du côté de l'extrémité libre de la patte 121. On précise ici que la direction axiale est définie par rapport à l'axe Z de la plaque de base 106 destiné à être sensiblement confondu avec l'axe X du rotor lorsque le réducteur est installé dans le démarreur.

Comme on peut le voir sur la figure 3a, les plots 122 présentent en outre une longueur axiale L3 correspondant à une longueur de côté du carré qui est de préférence inférieure à la longueur axiale L4 de la patte 121. Ainsi, le plot 122 est positionné axialement en retrait par rapport à l'arête saillante 146. En outre, suivant un plan de coupe P3 perpendiculaire au plan P4 dans lequel s'étend principalement le plot amortisseur 122, le plot amortisseur 122 présente à ses extrémités 148 une épaisseur E2 variable (cf. figure 4c). Aux extrémités 148, l'épaisseur E2 du plot amortisseur 122 suit une courbure en forme de demi-cercle de rayon R2.

Dans un exemple de réalisation, le rayon de courbure des coins 145 est par exemple de l'ordre de 4mm plus ou moins 10 pourcents. Le plot 122 présente une longueur L3 de côté de l'ordre de 13.3mm, tandis que la longueur axiale L4 de chaque patte est de l'ordre de 13.7mm. Le rayon de courbure de l'arc de cercle est de l'ordre de 1.7mm plus ou moins 10 pourcents.

Pour faciliter le montage du train réducteur en autorisant une mise en place du plot 122 suivant différentes directions, le plot 122 est de préférence symétrique et comporte alors quatre coins arrondis 145 analogues comme représenté.

Le plot 122 présente ainsi différents plans de symétrie, notamment deux plans de symétrie passant chacun par les médiatrices de deux côtés opposés (cf. plans P3 et P5 de la figure 4b) et deux autres plans de symétrie non représentés passant par des diagonales du plot 122 d'amortissement. Les plots 122 sont réalisés par exemple dans un matériau élastique, tel que de l'élastomère. De préférence, comme on peut le voir en figure 4c, les plots 122 présentent à l'état non contraint des faces 150 entre lesquelles s'étend l'épaisseur E2 qui sont planes et parallèles au plan d'extension principal P4 du plot 122. En effet, la courbure de chaque plot 122 est obtenue en mettant en contrainte le plot 122 réalisé dans un matériau élastique afin de lui faire épouser la forme correspondante de la couronne 102. Une des faces 150 pourra ainsi venir en appui contre la périphérie externe de la couronne dentée 102.

En variante, les plots 122 pourront présenter une forme rectangulaire.

En outre, afin d'assurer le calage de la plaque de base 106, un élément de maintien 125 prenant par exemple la forme d'un anneau d'arrêt élastique de type circlips est positionné dans une gorge 126 de l'arbre d'entraînement 11 pour venir en butée contre la plaque de base 106 (cf. figure 2a). L'anneau d'arrêt élastique 125 présente la forme d'un anneau ouvert apte à être déformé élastiquement à l'aide d'un outil pour permettre son positionnement à l'intérieur de la gorge 126. Afin d'absorber les chocs, l'anneau d'arrêt 125 est en appui contre une rondelle d'appui métallique 141 laquelle est en appui contre la portion plastique 109 de la plaque de base 108. Afin d'améliorer la tenue mécanique de l'anneau 125, ce dernier pourra présenter des traces de grenaillage de précontrainte.

## Revendications

1. Démarreur (10) pour moteur thermique d'un véhicule automobile comprenant:
- un moteur électrique (16) comprenant une culasse (21) et un rotor (18) monté sur un arbre (19),
- un arbre d'entraînement (11) apte à être entrainé en rotation par ledit rotor (18),
- un réducteur de vitesse (96) de type épicycloïdal monté entre l'arbre de rotor (19) et ledit arbre d'entraînement (11),
- ledit réducteur de vitesse (96) comprenant une couronne dentée (102) formant planétaire externe dudit réducteur de vitesse (96), un pignon (103) solidaire en rotation dudit arbre de rotor (19) formant un planétaire interne dudit réducteur de vitesse (96) et un porte-satellites (97) solidaire en rotation dudit arbre d'entraînement (11), aux moins deux satellites (101) montés libres en rotation sur ledit porte-satellites (97) et engrenés entre ledit planétaire interne et ledit planétaire externe,
- une plaque de base (106) portant ladite couronne dentée (102), ladite plaque de base (106) étant solidaire avec ladite culasse (21) dudit moteur électrique (16),
- la plaque de base (106) comprenant une portion plastique (109), laquelle comprend des parties butées (120) situées entre la couronne (102) et la culasse (21), ces parties butées (120) s'étendant circonférentiellement autour de la couronne (102),
- ladite couronne (102) comprenant des pattes (121) à sa périphérie externe, des plots amortisseurs (122) étant montés entre lesdites pattes (121) et lesdites parties butées (120), chaque plot amortisseur (122) présentant au moins un coin arrondi (145) du côté d'une arête saillante (146) d'une patte (121) correspondante de ladite couronne dentée (102), ledit coin arrondi étant arrondi suivant un rayon de courbure (R1) situé dans un plan (P4) comprenant l'ensemble des coins dudit plot amortisseur (122), de telle façon qu'il existe un espace (147) entre ledit coin arrondi (145) et un coin droit défini par l'intersection de plans (P1, P2) passant par des faces latérales reliées par ce coin arrondi (145), **caractérisé en ce que** le plot amortisseur (122) présente à ses extrémités une épaisseur variable et **en ce que** l'épaisseur du plot amortisseur (122) suit une courbure convexe en forme de demi-cercle à ses extrémités.

2. Démarreur selon la revendication 1, **caractérisé en ce que** les plots amortisseurs (122) présentent en outre une longueur axiale (L3) inférieure à une longueur axiale (L4) des pattes (121).

3. Démarreur selon la revendication 1 ou 2, **caractérisé en ce qu'**un rayon de courbure (R1) du coin (145) arrondi est de l'ordre de 4mm plus ou moins 10%.

4. Démarreur selon l'une quelconque des revendications 1 à 3, **caractérisé en ce que** les plots amortisseurs (122) présentent une forme carrée.

5. Démarreur selon l'une quelconque des revendications 1 à 4, **caractérisé en ce que** chaque plot amortisseur (122) est de préférence symétrique.

6. Démarreur selon l'une quelconque des revendications 1 à 5, **caractérisé en ce que** la couronne dentée (102) est montée avec un jeu radial (J) entre sa périphérie externe et une périphérie interne des parties butées (120), ledit jeu radial (J) étant tel qu'il autorise la couronne dentée (102) à s'auto-centrer sous des efforts appliqués par lesdits satellites (101).

7. Démarreur selon l'une quelconque des revendications 1 à 6, **caractérisé en ce que** ladite couronne dentée (102) est réalisée en acier fritté.

8. Démarreur selon l'une quelconque des revendications 1 à 7, **caractérisé en ce que** ladite plaque de base (106) comporte:
- une plaquette métallique (107),
- un coussinet (108) monté sur ledit arbre d'entraînement (11) pour guider en rotation ledit arbre d'entraînement (11),
- une portion plastique (109) surmoulée sur ladite plaquette métallique (107) et ledit coussinet (108) pour les rendre solidaires l'un de l'autre,
- ladite plaquette métallique (107) comprenant une portion principale (114) et un épaulement (115) s'étendant axialement par rapport à ladite portion principale (114) sur une extrémité située du côté dudit coussinet (108).

9. Démarreur selon la revendication 8, **caractérisé en ce que** ladite portion plastique (109) comprend une couche de plastique (112) entre une périphérie externe dudit coussinet (108) et une périphérie interne de ladite plaquette (107).

10. Démarreur selon la revendication 9, **caractérisé en ce qu'**une épaisseur (E) de ladite couche de plastique (112) est d'au moins 0.5mm.

11. Démarreur selon l'une quelconque des revendications 1 à 10, **caractérisé en ce qu'**un pignon d'entraînement (15) monté sur ledit arbre d'entraînement (11) est positionné en dehors d'un support (23) dudit démarreur (10).

12. Démarreur selon la revendication 11, **caractérisé en ce qu'**il comprend en outre un palier avant (61) monté entre ledit support (23) et ledit arbre d'entraînement (11) pour guider en rotation ledit arbre d'entraînement (11), un lanceur (12) comprenant des cannelures hélicoïdales coopérant avec des cannelures hélicoïdales dudit arbre d'entraînement (11) mobile entre une position repos et une position active et **en ce que** en position active, ledit lanceur (12) vient en butée contre un épaulement (93) dudit arbre d'entraînement (11) situé entre ladite plaque de base (106) et ledit palier avant (61).

## Patentansprüche

1. Anlasser (10) für einen Verbrennungsmotor eines Kraftfahrzeugs, umfassend:
- einen Elektromotor (16) mit einem Zylinderkopf (21) und einem auf einer Welle (19) montierten Rotor (18),
- eine Antriebswelle (11), die dazu geeignet ist, vom Rotor (18) drehend angetrieben zu werden,
- ein Untersetzungsgetriebe (96) vom Planetengetriebetyp, das zwischen der Rotorwelle (19) und der Antriebswelle (11) montiert ist,
- wobei das Untersetzungsgetriebe (96) ein Hohlrad (102), das ein äußeres Zentralrad des Untersetzungsgetriebes (96) bildet, ein Zahnrad(103), das drehfest mit der Rotorwelle (19) verbunden ist und ein inneres Zentralrad des Untersetzungsgetriebes (96) bildet, und einen Planetenradträger (97), der drehfest mit der Antriebswelle (11) verbunden ist, umfasst, wobei mindestens zwei Planetenräder (101) frei drehbar auf dem Planetenradträger (97) montiert sind und mit dem inneren Zentralrad und dem äußeren Zentralrad in Eingriff stehen,
- eine Grundplatte (106), die das Hohlrad (102) trägt, wobei die Grundplatte (106) fest mit dem Zylinderkopf (21) des Elektromotors (16) verbunden ist,
- wobei die Grundplatte (106) einen Kunststoffabschnitt (109) umfasst, der zwischen dem Hohlrad (102) und dem Zylinderkopf (21) angeordnete Anschlagteile (120) umfasst, wobei sich die Anschlagteile (120) in Umfangsrichtung um das Hohlrad (102) herum erstrecken,
- wobei das Hohlrad (102) an seinem Außenumfang Laschen (121) umfasst, wobei zwischen den Laschen (121) und den Anschlagteilen (120) Dämpfungsklötze (122) montiert sind,
wobei jeder Dämpfungsklotz (122) mindestens eine abgerundete Ecke (145) auf der Seite einer vorstehenden Kante (146) einer entsprechenden Lasche (121) des Hohlrades (102) aufweist, wobei die abgerundete Ecke entlang eines Krümmungsradius (R1) abgerundet ist, der in einer Ebene (P4) liegt, die die Gesamtheit der Ecken des Dämpfungsklotzes (122) umfasst, so dass zwischen der abgerundeten Ecke (145) und einer geraden Ecke, die durch den Schnittpunkt von Ebenen (P1, P2) definiert ist, die durch durch diese abgerundete Ecke (145) verbundene Seitenflächen verlaufen, ein Zwischenraum (147) besteht. **dadurch gekennzeichnet, dass** der Dämpfungsklotz (122) an seinen Enden eine variable Dicke aufweist und dass die Dicke des Dämpfungsklotzes (122) an seinen Enden einer konvexen Krümmung in Form eines Halbkreises folgt.

2. Anlasser nach Anspruch 1, **dadurch gekennzeichnet, dass** die Dämpfungsklötze (122) ferner eine axiale Länge (L3) aufweisen, die kleiner als eine axiale Länge (L4) der Laschen (121) ist.

3. Anlasser nach Anspruch 1 oder 2, **dadurch gekennzeichnet, dass** ein Krümmungsradius (R1) der abgerundeten Ecke (145) in der Größenordnung von 4 mm plus oder minus 10 % liegt.

4. Anlasser nach einem der Ansprüche 1 bis 3, **dadurch gekennzeichnet, dass** die Dämpfungsklötze (122) eine quadratische Form aufweisen.

5. Anlasser nach einem der Ansprüche 1 bis 4, **dadurch gekennzeichnet, dass** jeder Dämpfungsklotz (122) vorzugsweise symmetrisch ist.

6. Anlasser nach einem der Ansprüche 1 bis 5, **dadurch gekennzeichnet, dass** das Hohlrad (102) mit einem radialen Spiel (J) zwischen seinem Außenumfang und einem Innenumfang der Anschlagteile (120) montiert ist, wobei das radiale Spiel (J) so beschaffen ist, dass es dem Hohlrad (102) erlaubt, sich unter den von den Planetenrädern (101) aufgebrachten Kräften selbst zu zentrieren.

7. Anlasser nach einem der Ansprüche 1 bis 6, **dadurch gekennzeichnet, dass** das Hohlrad (102) aus gesintertem Stahl gefertigt ist.

8. Anlasser nach einem der Ansprüche 1 bis 7, **dadurch gekennzeichnet, dass** die Grundplatte (106) Folgendes aufweist:
- ein Metallplättchen (107),
- eine Lagerbuchse (108), die auf der Antriebswelle (11) montiert ist, um die Antriebswelle (11) drehbar zu führen,
- einen Kunststoffabschnitt (109), der auf das Metallplättchen (107) und die Lagerbuchse (108) aufgeformt ist, um sie miteinander zu verbinden,
- wobei das Metallplättchen (107) einen Hauptabschnitt (114) und eine Schulter (115) umfasst, die sich axial in Bezug auf den Hauptabschnitt (114) an einem auf der Seite der Lagerbuchse (108) befindlichen Ende erstreckt.

9. Anlasser nach Anspruch 8, **dadurch gekennzeichnet, dass** der Kunststoffabschnitt (109) zwischen einem Außenumfang der Lagerbuchse (108) und einem Innenumfang des Plättchens (107) eine Kunststoffschicht (112) umfasst.

10. Anlasser nach Anspruch 9, **dadurch gekennzeichnet, dass** eine Dicke (E) der Kunststoffschicht (112) mindestens 0,5 mm beträgt.

11. Anlasser nach einem der Ansprüche 1 bis 10, **dadurch gekennzeichnet, dass** ein auf der Antriebswelle (11) montiertes Antriebszahnrad (15) außerhalb eines Trägers (23) des Anlassers (10) montiert ist.

12. Anlasser nach Anspruch 11, **dadurch gekennzeichnet, dass** er ferner ein vorderes Lager (61), das zwischen dem Träger (23) und der Antriebswelle (11) montiert ist, um die Antriebswelle (11) drehbar zu führen, und ein Ritzel (12) mit Schraubennuten, die mit Schraubennuten der Antriebswelle (11) zusammenwirken, das zwischen einer Ruheposition und einer aktiven Position bewegbar ist, umfasst und dass das Ritzel (12) in der aktiven Position an einer Schulter (93) der Antriebswelle (11) anliegt, die sich zwischen der Grundplatte (106) und dem vorderen Lager (61) befindet.

## Claims

1. Starter (10) for a combustion engine of a motor vehicle, comprising:
- an electric motor (16) comprising a yoke (21) and a rotor (18) mounted on a shaft (19),
- a drive shaft (11) able to be driven to rotate by said rotor (18),
- a speed reducer (96) of the epicyclic type mounted between the rotor shaft (19) and said drive shaft (11),
- said speed reducer (96) comprising a ring gear (102) forming an annulus gear of said speed reducer (96), a pinion (103) rotationally coupled to said rotor shaft (19) forming a sun gear of said speed reducer (96), and a planet carrier (97) rotationally coupled to said drive shaft (11), at least two planet gears (101) being mounted in free rotation on said planet carrier (97) and engaged between said sun gear and said annulus gear,
- a base plate (106) bearing said ring gear (102), said base plate (106) being secured to said yoke (21) of said electric motor (16),
- the base plate (106) comprising a plastic portion (109), which comprises abutment parts (120) situated between the ring gear (102) and the yoke (21), these abutment parts (120) extending circumferentially around the ring gear (102),
- said ring gear (102) comprising tabs (121) at its external periphery, damping pads (122) being mounted between said tabs (121) and said abutment parts (120), each damping pad (122) having at least one rounded corner (145) on a salient edge (146) side of a corresponding tab (121) of said ring gear (102), said rounded corner being rounded with a radius of curvature (R1) situated in a plane (P4) comprising all the corners of said damping pad (122), in such a way that there is space (147) between said rounded corner (145) and a right-angle corner defined by the intersection of planes (P1, P2) passing through lateral faces connected by this rounded corner (145),
**characterized in that** the damping pad (122) has a variable thickness at its ends, and **in that** the thickness of the damping pad (122) follows a convex curvature in the form of a semicircle at its ends.

2. Starter according to Claim 1, **characterized in that** the damping pads (122) additionally have an axial length (L3) which is less than an axial length (L4) of the tabs (121) .

3. Starter according to Claim 1 or 2, **characterized in that** a radius of curvature (L1) of the rounded corner (145) is of the order of 4 mm plus or minus 10%.

4. Starter according to any one of Claims 1 to 3, **characterized in** the damping pads (122) have a square shape.

5. Starter according to any one of Claims 1 to 4, **characterized in that** each damping pad (122) is preferably symmetrical.

6. Starter according to any one of Claims 1 to 5, **characterized in that** the ring gear (102) is mounted with a radial clearance (J) between its external periphery and an internal periphery of the abutment parts (120), said radial clearance (J) being such that it allows the ring gear (102) to be self-centred under forces applied by said planet gears (101).

7. Starter according to any one of Claims 1 to 6, **characterized in that** said ring gear (102) is made of sintered steel.

8. Starter according to any one of Claims 1 to 7, **characterized in that** said base plate (106) comprises:
- a metal plate (107),
- a bearing bushing (108) mounted on said drive shaft (11) in order to rotationally guide said drive shaft (11),
- a plastic portion (109) overmoulded on said metal plate (107) and said bearing bush (108) to secure them to one another,
- said metal plate (107) comprising a main portion (114) and a shoulder (115) extending axially with respect to said main portion (114) on an end situated on said bearing bush (108) side.

9. Starter according to Claim 8, **characterized in that** said plastic portion (109) comprises a plastic layer (112) between an external periphery of said bearing bush (108) and an internal periphery of said plate (107).

10. Starter according to Claim 9, **characterized in that** a thickness (E) of said plastic layer (112) is at least 0.5 mm.

11. Starter motor according to any one of Claims 1 to 10, **characterized in that** a drive pinion (15) mounted on said drive shaft (11) is positioned outside a support (23) of said starter (10).

12. Starter according to Claim 11, **characterized in that** it additionally comprises a front bearing (61) mounted between said support (23) and said drive shaft (11) in order to rotationally guide said drive shaft (11), a meshing drive (12) comprising helical splines cooperating with helical splines of said drive shaft (11) that is movable between a rest position and an active position, and **in that**, in the active position, said meshing drive (12) butts against a shoulder (93) of said drive shaft (11) situated between said base plate (106) and said front bearing (61).
